# EUROPÄISCHE PATENTSCHRIFT

(11) **EP 3 465 700 B1**
(45) Veröffentlichungstag und Bekanntmachung des Hinweises auf die Patenterteilung: **13.10.2021**
(21) Anmeldenummer: 17727582.3
(22) Anmeldetag: 02.06.2017
(51) Int. Cl.: H01B 7/00, H02P 27/04, F04D 13/06

(54) **VORRICHTUNG UND VERFAHREN ZUM ANTREIBEN EINER VAKUUMPUMPE**
APPARATUS AND METHOD TO DRIVE A VACUUM PUMP
DISPOSITIF ET PROCÉDÉ POUR ENTRAÎNER UNE POMPE À VIDE

(30) Priorität: 07.06.2016 DE 102016209983
(43) Veröffentlichungstag der Anmeldung: 10.04.2019
(73) Patentinhaber: Leybold GmbH, 50968 Köln (DE)
(72) Erfinder: LIESSMANN, Markus, 41542 Dormagen (DE); WALZEL, Sebastian, 59427 Unna (DE)
(74) Vertreter: dompatent von Kreisler Selting Werner - Partnerschaft von Patent- und Rechtsanwälten mbB
(86) Internationale Anmeldenummer: PCT/EP2017/063528
(87) Internationale Veröffentlichungsnummer: WO 2017/211735

(56) Entgegenhaltungen:
- EP-A1- 0 597 365
- EP-A1- 1 303 800
- EP-A1- 2 961 021
- CN-A- 101 950 981
- DE-A1- 19 522 873
- DE-T2- 69 505 546
- JP-A- 2001 231 268

## Beschreibung

Die Erfindung betrifft eine Vorrichtung und ein Verfahren zum Antreiben einer Vakuumpumpe.

Es ist bekannt, Vakuumpumpen mit einem Elektromotor anzutreiben, der über eine elektrische Zuleitung von einem Frequenzumrichter mit einer Wechselspannung versorgt wird. Der Frequenzumrichter erzeugt eine Spannung variabler Frequenz und/oder Amplitude, um den Elektromotor frequenzund/oder amplitudenabhängig zu betreiben.

Ein solcher Frequenzumrichter - auch Antriebsumrichter genannt - erzeugt eine in Spannung und Frequenz variable ein- oder mehrphasige Spannung.

Üblicherweise werden derartige Umrichter entweder von einem Spannungsversorgungsnetz mit einer Wechselspannung von beispielsweise 230V oder 400V oder mit einer Gleichspannung von beispielsweise 24V oder 48V versorgt. Im Falle der Versorgung mit einer Wechselspannung wird diese gleichgerichtet und einem Gleichspannungszwischenkreis des Antriebsumrichters zugeführt. Im Falle der Versorgung mit einer Gleichspannung wird der Zwischenkreis direkt mit der Gleichspannung versorgt. Die im Zwischenkreis anliegende Gleichspannung wird dann in eine synthetische ein- oder mehrphasige Wechselspannung mit variabler Spannungsamplitude und/oder Frequenz umgewandelt und zur Versorgung des Elektromotors verwendet, der die Vakuumpumpe antreibt. Dabei stehen die Zwischenkreisspannung und die Nennspannung des Elektromotors üblicherweise in einem Verhältnis von etwa 1,5 zu 1.

Einige Vakuumpumpen, zum Beispiel in radioaktiver Umgebung, hohen Temperaturen, explosiven Umgebungen oder auch bei großen Beschleunigeranlagen, müssen über große Entfernungen, z.B. 1000 m, von dem Antriebsumrichter abgesetzt werden, da der Antriebsumrichter nicht zum Betrieb in beispielsweise radioaktiver, heißer oder explosiver Umgebung geeignet ist. Gleichzeitig müssen die Pumpen aus Gründen der Isolationsfestigkeit (Paschen Gesetz), des Explosionsschutzes oder aus Gründen der Sicherheit mit einer geringen Spannung versorgt werden. Beispielsweise werden Turbomolekularpumpen (TMP) mit 24V oder 48V versorgt.

Diese geringen Versorgungsspannungen bedingen relativ hohe Ströme, welche wiederum bei langen Zuleitungen zu erhöhten Verlusten führen, welche kompensiert werden müssen. Weiterhin haben die Zuleitungen für hohe Ströme auch eine große Eigenkapazität, welche bei Betrieb des Motors fortwährend umgeladen werden muss. Das erhöht den Wert der Ströme über die lange Zuleitung weiter. Das Dokument JP 2001 231 268 zeigt den Einsatz von Filtern zwischen einem Antriebsumrichter und einem Motor. Das Dokument DE 695 05 546 zeigt den Betrieb eines Niederspannungspumpenaggregates mit langer Zuleitung zwischen Frequenzumrichter und Motor. Die Ausgangsspannung des Frequenzumrichters wird durch einen nachgeschalteteten Transformator auf eine niedrige Schutzkleinspannung umgesetzt, mit der der Motor gespeist wird.

Der Erfindung liegt die Aufgabe zugrunde, die Leitungsverluste bei einem Vakuumpumpenantrieb mit entfernt von einem Elektromotor angeordnetem Frequenzumrichter zu reduzieren.

Der erfindungsgemäße Vakuumpumpenantrieb ist definiert durch die Merkmale von Patentanspruch 1. Das erfindungsgemäße Verfahren ist definiert durch die Merkmale von Patentanspruch 9.

Die Erfindung basiert auf dem Grundgedanken, in der elektrischen Zuleitung vom Frequenzumrichter zum Elektromotor des Vakuumpumpenantriebs einen Energie übertragenden Transformator in Form eines Übertragers mit einem Kern aus Ferrit oder Sintermaterial vorzusehen, um die vom Antriebsumrichter gelieferte Spannung zur Versorgung des Motors auf ein anderes Spannungsniveau zu transformieren, zum Beispiel von 400V auf 48V.

Diese Verschaltung ermöglicht es, zur Versorgung des Antriebsmotors einer Vakuumpumpe einen Antriebsumrichter einzusetzen, welcher eine im Verhältnis zu Motorspannung deutlich höhere Zwischenkreisspannung und damit auch Motorausgangsspannung besitzt (z.B. von etwa 200V oder 400V).

Auch eine umgekehrte Transformation und damit der Einsatz eines Antriebsumrichters mit deutlich kleinerer Zwischenkreisspannung im Verhältnis zur Motornennspannung sind möglich. Damit könnten beispielsweise hohe Drehfeldfrequenzen bei verhältnismäßig hohen Motornennspannungen erzeugt werden.

Bei dem Transformator kann es sich um einen einphasigen oder um einen mehrphasigen Transformator handeln, wobei bei mehrphasigen Systemen auch mehrere einphasige Transformatoren eingesetzt werden. Auch die Verschaltung mehrerer Transformatoren hintereinander zur stufenweisen Anpassung ist möglich.

In der Erfindung wird vorgeschlagen zur Versorgung der Vakuumpumpe einen Umrichter einzusetzen, welcher eine deutlich höhere Ausgangsspannung als die Motorspannung besitzt, beispielsweise einen Standard-Umrichter mit 230V oder 400V Netz-Versorgung.

In unmittelbarer Nähe der anzutreibenden Pumpe wäre dann ein Transformator zwischen dem Umrichter und der Vakuumpumpe installiert. Dieser Transformator transformiert die Spannung von beispielsweise 230V oder 400V auf das für den Motor notwendige Niveau, z.B. 48V. Auf dem überwiegenden Teil der Motorleitung wären dann eine höhere Spannung und ein geringerer Strom vorhanden, welches wiederum zu geringen Verlusten auf der Zuleitung führt. Gleichzeitig kann die zu dem Transformator führende Zuleitung dünner und damit kapazitätsärmer ausgeführt werden als zuvor.

Der Transformator kann vollständig gekapselt oder vergossen sein, so dass keine Gefahr der Verunreinigung oder eines Spannungsüberschlages besteht. Zudem sind Transformatoren unempfindlich gegenüber Temperaturen oder radioaktiver Bestrahlung.

Im Folgenden werden anhand der Figuren Ausführungsbeispiele der Erfindung näher erläutert. Die Figuren zeigen:
- Fig. 1: ein erstes Ausführungsbeispiel,
- Fig. 2: ein zweites Ausführungsbeispiel und
- Fig. 3: ein drittes Ausführungsbeispiel.

Bei allen der drei dargestellten Ausführungsbeispiele ist ein Elektromotor 12 zum Antrieb einer Vakuumpumpe 14 vorgesehen. Der Elektromotor 12 wird von einem Frequenzumrichter 16 über eine elektrische Zuleitung 18 mit einer elektrischen Spannung variabler Frequenz und Amplitude versorgt. Das Drehmoment des Elektromotors 12 wird amplituden- und frequenzabhängig über den Frequenzumrichter 16 erzeugt.

Der Frequenzumrichter 16 ist aufgrund von Sicherheitsanforderungen in einem Abstand von mindestens 800m und vorzugsweise etwa 1km von dem Antriebselektromotor 12 und der Vakuumpumpe 14 angeordnet. Um die elektrischen Verluste bei der Übertragung der Antriebsspannung über die lange elektrische Zuleitung 18 zu reduzieren, ist in der Zuleitung 18 ein elektrischer Transformator 20 in Form eines Übertragers mit einem Kern aus Ferrit oder Sintermaterial vorgesehen. Ein erster Abschnitt 18a der elektrischen Zuleitung 18 ist der Zuleitungsabschnitt zwischen dem Frequenzumrichter 16 und dem Transformator 20. Ein zweiter Zuleitungsabschnitt 18b der elektrischen Zuleitung 18 ist der Zuleitungsabschnitt zwischen dem Transformator 20 und dem Elektromotor 12. Allen drei Ausführungsbeispielen ist gemein, dass der erste Zuleitungsabschnitt 18a erheblich länger ist als der Zuleitungsabschnitt 18b. Während der Zuleitungsabschnitt 18b nur eine Länge von wenigen Metern aufweist, ist der Zuleitungsabschnitt 18a mehrere hundert Meter lang.

Frequenzumrichter 16 und Transformator 20 sind dazu ausgebildet, über den ersten Zuleitungsabschnitt 18a eine Spannung von mehreren hundert Volt, zum Beispiel 400V, zu übertragen, während über den Zuleitungsabschnitt 18b nur eine Spannung von wenigen zehn Volt, zum Beispiel 48V, übertragen wird. Mit Hilfe der 48V-Wechselspannung des zweiten Zuleitungsabschnitts 18b werden die Sicherheitsanforderungen, die zum Beispiel in radioaktiver Umgebung, bei hohen Temperaturen, in explosiven Umgebungen oder auch bei großen Beschleunigeranlagen bestehen, eingehalten, während die Leitungsverluste der Übertragung vom Frequenzumrichter zum Elektromotor 12 dadurch reduziert werden, dass der möglichst lange erste Zuleitungsabschnitt 18a eine sehr viel höhere Wechselspannung mit dadurch deutlich geringeren Verlusten überträgt.

Der Querschnitt der für die erste Zuleitung 18a verwendeten Leitungen ist geringer als der Querschnitt der für die zweite Zuleitung 18b verwendeten Leitungen und beträgt maximal 1,5mm² Die Kapazität der für den ersten Zuleitungsabschnitt 18a verwendeten Leitungen ist ebenfalls geringer als die Kapazität der für den zweiten Zuleitungsabschnitt 18b verwendeten Leitungen und beträgt weniger als etwa 100pF/m.

Während also über den ersten Zuleitungsabschnitt 18a über eine lange Leitung eine hohe Spannung und ein geringer Strom durch ein dünnes Kabel mit geringer Kapazität und geringen Verlusten übertragen werden, wird über einen kurzen Zuleitungsabschnitt 18b ein hoher Strom und eine geringe Spannung übertragen.

Der wesentliche Vorteil der Erfindung besteht darin, dass je nach Position des Transformators 20 innerhalb der Zuleitung 18 die Strombelastung eines großen Teils der Motorzuleitung 18 erheblich reduziert wird. Damit werden die Leitungsverluste deutlich minimiert. Zugleich kann der elektrisch leitfähige Querschnitt der Zuleitung 18 deutlich verringert werden. Das spart Kosten, verringert zugleich auch die elektrische Kapazität der Zuleitung und damit die Umladungsströme oder Blindströme im Antriebsumrichter 16.

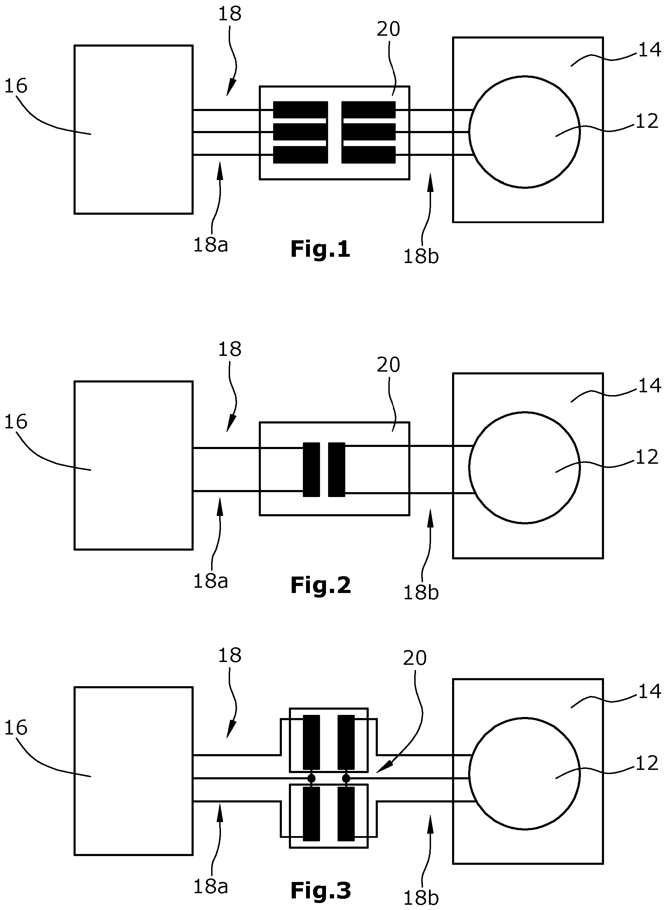

Bei dem Ausführungsbeispiel nach Fig. 1 wird ein dreiphasiger Transformator innerhalb einer dreiphasigen Zuleitung 18 betrieben.

Bei dem Ausführungsbeispiel nach Fig. 2 wird ein zweiphasiger Transformator in einer zweiphasigen Zuleitung 18 betrieben.

Bei dem Ausführungsbeispiel nach Fig. 3 werden zwei parallel geschaltete zweiphasige Transformatoren 20 in einer dreiphasigen Zuleitung 18 betrieben.

## Patentansprüche

1. Vakuumpumpenantrieb mit einem Elektromotor (12) und einem elektrisch mit dem Elektromotor (12) verbundenen und entfernt von dem Motor angeordneten Frequenzumrichter (16),
wobei in der elektrischen Zuleitung (18) vom Frequenzumrichter (16) zum Elektromotor (12) ein Transformator (20) zur Energieübertragung in Form eines Übertragers mit einem Kern aus Ferrit- oder Sintermaterial angeordnet ist,
dass ein erster Abschnitt (18a) der elektrischen Zuleitung (18) zwischen Frequenzumrichter (16) und Transformator (20) deutlich länger ausgebildet ist als ein zweiter Abschnitt (18b) der elektrischen Zuleitung (18) zwischen dem Transformator (20) und dem Elektromotor (12),
dass der Frequenzumrichter (16) und der Transformator (20) zur Übertragung einer ersten Spannung über den ersten Zuleitungsabschnitt (18a) ausgebildet sind, die größer ist als die über den zweiten Zuleitungsabschnitt (18b) zwischen Transformator (20) und Elektromotor (12) übertragene Spannung, wobei die erste Spannung mindestens doppelt so groß ist wie die über den zweiten Zuleitungsabschnitt (18b) zwischen Transformator (20) und Elektromotor (12) übertragene Spannung.

2. Vakuumpumpenantrieb nach Anspruch 1, **dadurch gekennzeichnet, dass** der erste Abschnitt mindestens zweimal so lang und vorzugsweise etwa mindestens zehnmal so lang wie ein zweiter Abschnitt (18b) der elektrischen Zuleitung (18) zwischen dem Transformator (20) und dem Elektromotor (12) ist.

3. Vakuumpumpe nach Anspruch 1 oder 2, **dadurch gekennzeichnet, dass** die erste Spannung mindestens achtmal so groß ist wie die über den zweiten Zuleitungsabschnitt (18b) zwischen Transformator (20) und Elektromotor (12) übertragene Spannung.

4. Vakuumpumpenantrieb nach einem der vorhergehenden Ansprüche, **dadurch gekennzeichnet, dass** der Frequenzumrichter (16) mindestens 100 m und vorzugsweise mindestens 500 m von dem Elektromotor (12) entfernt angeordnet ist.

5. Vakuumpumpenantrieb nach einem der vorhergehenden Ansprüche, **dadurch gekennzeichnet, dass** die Stromkabel des ersten Zuleitungsabschnitts zwischen Frequenzumrichter (16) und Transformator (20) einen dünnen Querschnitt von maximal 1,5mm² aufweisen.

6. Vakuumpumpenantrieb nach einem der vorhergehenden Ansprüche, **dadurch gekennzeichnet, dass** die Kabel des ersten Zuleitungsabschnitts zwischen Frequenzumrichter (16) und Transformator (20) eine Kapazität von weniger als etwa 100pF/m aufweisen.

7. Vakuumpumpenantrieb nach einem der vorhergehenden Ansprüche, **dadurch gekennzeichnet, dass** die Kabel des ersten Zuleitungsabschnitts zwischen Frequenzumrichter (16) und Transformator (20) dünner und mit geringerer Kapazität ausgebildet sind als die Kabel des zweiten Zuleitungsabschnitts zwischen Transformator (20) und Elektromotor (12).

8. Verfahren zum Antreiben einer Vakuumpumpe mit einem Vakuumpumpenantrieb nach einem der vorhergehenden Ansprüche, wobei über den ersten Zuleitungsabschnitt zwischen Frequenzumrichter (16) und Transformator (20) eine höhere Spannung und ein geringerer Strom übertragen werden als über den zweiten Zuleitungsabschnitt zwischen Transformator (20) und Elektromotor (12).

9. Verfahren nach dem vorhergehenden Anspruch, **dadurch gekennzeichnet, dass** die Spannung des ersten Zuleitungsabschnitts mindestens fünfmal und vorzugsweise mindestens achtmal so groß ist wie die Spannung des zweiten Zuleitungsabschnitts.

## Claims

1. A vacuum pump drive having an electric motor (12) and a frequency converter (16) electrically connected to said electric motor (12) and arranged at a distance to said motor,
wherein
in the electric feed line (18) from said frequency converter (16) to said electric motor (12) a transformer (20) in the form of a transmitter of ferrite or sinter material is arranged for energy transmission,
a first section (18a) of the electric feed line (18) between the frequency converter (16) and the transformer (20) is made considerably longer than a second section (18b) of said electric feed line (18) between said transformer (20) and the electric motor (12),
the frequency converter (16) and the transformer (20) are configured for transmitting a first voltage via the first feed line section (18a), which is larger than the voltage transmitted via the second feed line section (18b) between said transformer (20) and the electric motor (12), the first voltage being at least twice as large as the voltage transmitted via the second feed line section (18b) between the transformer (20) and the electric motor (12).

2. The vacuum pump drive according to claim 1, wherein the first section is at least twice as long and preferably approximately ten times as long as a second section (18b) of the electric feed line (18) between the transformer (20) and the electric motor (12).

3. The method according to claim 1 or 2, wherein the first voltage is at least eight times as large as the voltage transmitted via the second section (18b) of the electric feed line between the transformer (20) and the electric motor (12).

4. The vacuum pump drive according to one of the preceding claims, wherein the frequency converter (16) is arranged at a distance of at least 100m and preferably at least 500m from the electric motor (12).

5. The vacuum pump drive according to one of the preceding claims, wherein the electric cables of the first feed line section between the frequency converter (16) and the transformer (20) have a small cross-section of approximately 1.5 mm².

6. The vacuum pump drive according to one of the preceding claims, wherein the cables of the first feed line section between the frequency converter (16) and the transformer (20) have a capacitance of less than approximately 100 pF/m.

7. The vacuum pump drive according to one of the preceding claims, wherein the cables of the first feed line section between the frequency converter (16) and the transformer (20) are made thinner and with a smaller capacitance than the cables of the second feed line section between said transformer (20) and the electric motor (12).

8. A method for driving a vacuum pump having a vacuum pump drive according to one of the preceding claims, wherein via the first feed line section between a frequency converter (16) and a transformer (20) a higher voltage and a smaller current are transmitted than via the second feed line section between said transformer (20) and the electric motor (12).

9. The method according to the preceding claim, wherein the voltage on the first feed line section is at least five times as large and preferably at least eight times as large as the voltage on the second feed line section.

## Revendications

1. Entraînement de pompe à vide comprenant un moteur électrique (12) et un convertisseur de fréquence (16) relié électriquement au moteur électrique (12) et agencé à distance du moteur,
un transformateur (20) permettant un transfert d'énergie et se présentant sous la forme d'un dispositif de transfert avec un noyau de ferrite ou de matériau fritté étant agencé au sein de la ligne d'alimentation électrique (18) allant du convertisseur de fréquence (16) au moteur électrique (12) **de façon telle**
qu'une première section (18a) de la ligne d'alimentation électrique (18) entre le convertisseur de fréquence (16) et le transformateur (20) soit rendue plus longue qu'une seconde section (18b) de la ligne d'alimentation électrique (18) entre le transformateur (20) et le moteur électrique (12),
que le convertisseur de fréquence (16) et le transformateur (20) soient configurés pour transférer, par l'intermédiaire de la première section de ligne d'alimentation (18a), une première tension supérieure à la tension transférée par l'intermédiaire de la seconde section de ligne d'alimentation (18b) entre le transformateur (20) et le moteur électrique (12), la première tension étant au moins deux fois supérieure à la tension transférée par l'intermédiaire de la seconde section de ligne d'alimentation (18b) entre le transformateur (20) et le moteur électrique (12).

2. Entraînement de pompe à vide selon la revendication 1, **caractérisé en ce que** la première section est au moins deux fois plus longue et de manière préférée au moins dix fois plus longue qu'une seconde section (18b) de la ligne d'alimentation électrique (18) entre le transformateur (20) et le moteur électrique (12).

3. Pompe à vide selon la revendication 1 ou 2, **caractérisée en ce que** la première tension est au moins huit fois supérieure à la tension transférée par l'intermédiaire de la seconde section de ligne d'alimentation (18b) entre le transformateur (20) et le moteur électrique (12).

4. Entraînement de pompe à vide selon l'une quelconque des revendications précédentes, **caractérisé en ce que** le convertisseur de fréquence (16) est agencé à une distance d'au moins 100 m, de manière préférée d'au moins 500 m, par rapport au moteur électrique (12).

5. Entraînement de pompe à vide selon l'une quelconque des revendications précédentes, **caractérisé en ce que** les câbles d'alimentation de la première section de ligne d'alimentation entre le convertisseur de fréquence (16) et le transformateur (20) présentent une section transversale mince d'au plus 1,5 mm².

6. Entraînement de pompe à vide selon l'une quelconque des revendications précédentes, **caractérisé en ce que** les câbles de la première section de ligne d'alimentation entre le convertisseur de fréquence (16) et le transformateur (20) présentent une capacité inférieure à environ 100 pF/m.

7. Entraînement de pompe à vide selon l'une quelconque des revendications précédentes, **caractérisé en ce que** les câbles de la première section de ligne d'alimentation entre le convertisseur de fréquence (16) et le transformateur (20) sont configurés pour être plus mince et présenter une capacité plus faible que les câbles de la seconde section de ligne d'alimentation entre le transformateur (20) et le moteur électrique (12).

8. Procédé d'entraînement d'une pompe à vide avec un entraînement de pompe à vide selon l'une quelconque des revendications précédentes, une tension plus élevée et un courant plus faible étant transférés par l'intermédiaire de la première section de ligne d'alimentation entre le convertisseur de fréquence (16) et le transformateur (20) que par l'intermédiaire de la seconde section de ligne d'alimentation entre le transformateur (20) et le moteur électrique (12).

9. Procédé selon la revendication précédente, **caractérisé en ce que** la tension de la première section de ligne d'alimentation est au moins cinq fois, et de manière préférée au moins huit fois, supérieure à la tension de la seconde section de ligne d'alimentation.
